# EUROPÄISCHE PATENTANMELDUNG

(11) **EP 4 711 174 A1**
(43) Veröffentlichungstag der Anmeldung: **18.03.2026**
(21) Anmeldenummer: 25201274.5
(22) Anmeldetag: 10.09.2025
(51) Int. Cl.: B60K 35/10, B60K 35/50, B60K 35/60

(54) **BERÜHRSCHUTZ FÜR WENIGSTENS EIN BEDIENELEMENT EINES FAHRZEUGS**

(30) Priorität: 16.09.2024 DE 102024126590
(71) Anmelder: MAN Truck & Bus SE, 80995 München (DE)
(72) Erfinder: Anderle, Dominik, 86551 Aichach (DE); Hillebrand, Svenja, 80995 München (DE); Pröll, Reinhard, 86672 Thierhaupten (DE); Schechner, Korbinian, 80995 München (DE)

(57) **Zusammenfassung**

Die vorliegende Offenbarung betrifft einen Berührschutz für wenigstens ein Bedienelement eines, insbesondere autonomen, Fahrzeugs, der eingerichtet ist, eine Betätigung des wenigstens einen Bedienelements während eines, insbesondere autonomen, Fahrbetriebs, im Wesentlichen zu verhindern, wobei das wenigstens eine Bedienelement einen mechanischen und/oder hydraulischen Durchgriff zu einem entsprechenden Aktor des, insbesondere autonomen, Fahrzeugs, umfasst.

## Beschreibung

Die vorliegende Erfindung betrifft einen Berührschutz für wenigstens ein Bedienelement eines, insbesondere autonomen, Fahrzeugs.

In einem automatisierten oder autonomen Betrieb eines Fahrzeugs, beispielsweise in einem autonomen Fahrbetrieb gemäß den SAE-Standardklassifizierungen Level 4 (kurz L4, L4-Betrieb oder SAE Level 4 Betrieb) und/oder den SAE-Standardklassifizierungen Level 5 (kurz L5, L5-Betrieb oder SAE Level 5 Betrieb), kann das, insbesondere autonome, Fahrzeug bestimmte Fahraufgaben bewältigen bzw. im Wesentlichen vollständig autonom operieren, ohne dass z.B. ein menschlicher Passagier eingreifen bzw. unterstützen muss. Die Abkürzung "SAE" kann dabei für Society of Automotive Engineers stehen, welche Normen und/oder Standards für die Automobilindustrie erstellt und autonome Fahrstufen klassifizieren kann. In einem autonomen Fahrbetrieb gemäß SAE L4 kann das, insbesondere autonome, Fahrzeug z.B. auf festgelegten Strecken (ODD, Operational Design Domain) die Fahraufgabe im Wesentlichen ohne Eingriffe/Unterstützung durch einen menschlichen Passagier bewältigen. In einem autonomen Fahrbetrieb gemäß L5 Betrieb kann das, insbesondere autonome, Fahrzeug die Fahraufgabe im Wesentlichen ohne Eingriffe/Unterstützung durch einen menschlichen Passagier bewältigen.

In der Regel werden "Dual Mode"-Fahrzeuge eingesetzt bzw. verwendet, die sowohl autonom als auch mit menschlichem Passagier betrieben werden können. Bei heutigen (Nutz- )Fahrzeugen weisen manche Bedienelemente, z.B. Lenkung und/oder Bremse eine mechanische und/oder hydraulische Kopplung zwischen z.B. Lenkrad/Bremspedal und/oder z.B. Lenkaktor/Bremssystem auf, die während der Fahrt bestehen bleibt, bzw. aufrechterhalten wird. Dies gewährleistet unter anderem, dass der Fahrer auch bei einem Ausfall von elektronischen/elektrischen "EE"-Systemen immer noch eine Durchgriffsmöglichkeit auf/zu den/dem jeweiligen Aktor hat. Dies ist beispielsweise im direkten Gegensatz zu "by-wire"-Systemen, also z.B. Lenksystemen, die nicht mehr mittels einer durchgehenden z.B. mechanischen Verbindung zwischen Lenkrad und Vorderachse lenken.

Diese Durchgriffsmöglichkeit stellt für den autonomen Fahrbetrieb gemäß SAE Level 4 oder SAE Level 5 jedoch ein Problem dar. Im autonomen Fahrbetrieb muss man davon ausgehen, dass jede Betätigung eines Bedienelements, wie beispielsweise Köpfe, Hebel, Schalter, Tasten, Pedale, Griffe, Lenkrad, Touchscreen oder dergleichen ungewollt bzw. versehentlich ist. Eine derartige Betätigung kann mehrere Ursachen haben, wie beispielsweise ungesicherte und/oder lose bzw. herumfallende und/oder -rollende Ladung im Fahrerhaus, dem Fahrerraum und/oder der Kabine, beispielsweise durch Gegenstände wie Koffer, Taschen, Schuhe, Flaschen oder ähnliche und/oder durch Passagiere, die beispielsweise versehentlich auf die Bedienelemente zugreifen bzw. diese berühren bzw. betätigen. Für eine sichere Erfüllung der Fahraufgabe müssen solche Interaktionen und/oder Betätigungen jedoch ignoriert bzw. ausgeschlossen werden.

Alle Bedienelemente die z.B. mittels EE-Systemen auf Aktoren zugreifen, können einfach innerhalb der EE-Systeme für die Dauer des autonomen Betriebs deaktiviert werden. Bei den anderen genannten Bedienelementen wie z.B. Bremspedal und/oder Lenkrad etc. ist dies aufgrund des direkten mechanischen und/oder hydraulischen Durchgriffs hingegen nicht möglich. Somit kann beispielsweise ein Verklemmen und/oder Bewegen des Lenkrads, oder das Drücken bzw. Auslösen des Bremspedals, beispielsweise durch ungesicherte Ladung oder Personen im Fahrerhaus, zu ungewollten Bewegungen des Fahrzeugs führen, die durch dessen Automatisierungssystem nicht beherrschbar sind und enorme Gefahren für den Straßenverkehr verursachen können.

Es ist Aufgabe der vorliegenden Erfindung, die Nachteile aus dem bekannten Stand der Technik zu überwinden und insbesondere eine Vorrichtung, insbesondere einen Berührschutz, bereitzustellen, der unter anderem derartige Gefahren minimiert kann.

Die Aufgabe wird durch die Merkmale der unabhängigen Ansprüche gelöst. Die abhängigen Patentansprüche beschreiben bevorzugte Ausführungsformen. Weitere Aspekte, Vorteile und Merkmale ergeben sich aus den abhängigen Ansprüchen, der Beschreibung.

Die Erfindung betrifft einen Berührschutz für wenigstens ein Bedienelement eines, insbesondere autonomen, Fahrzeugs, der eingerichtet ist, eine Betätigung des wenigstens einen Bedienelements während eines, insbesondere autonomen, Fahrbetriebs, im Wesentlichen zu verhindern, wobei das wenigstens eine Bedienelement einen mechanischen und/oder hydraulischen Durchgriff zu einem entsprechenden Aktor des, insbesondere autonomen, Fahrzeugs, umfasst.

Unter einem "Berührschutz" kann eine Vorrichtung, Struktur, Einheit, (Bau-)Teil und/oder ein System verstanden werden, die eingerichtet ist, sicherzustellen, dass ein oder mehrere Bedienelement, z.B. eines autonomen Fahrzeugs, nur aktiviert, betätigt, ausgelöst, gedrückt, berührt, bewegt, gesteuert und/oder manipuliert werden, wenn dies z.B. unter sicheren Bedingungen geschieht, beispielsweise im Stillstand, und/oder unbeabsichtigte, versehentliche und/oder unerwünschte Berührungen im Wesentlichen vermieden werden. Der Berührschutz kann z.B. als eine physische Barriere, Blockade, Schranke und/oder Grenze um das wenigstens eine Bedienelemente herum ausgebildet sein, um eine ungewollte Betätigung durch ungesicherte Ladung zu verhindern. Für autonome Fahrzeuge ist dies besonders wichtig, da diese Fahrzeuge komplexe Fahraufgaben autonom ausführen und eine unbeabsichtigte Interaktion mit einem oder mehreren Bedienelementen potenziell gefährliche Situationen, z.B. Gefahren für den Straßenverkehr, hervorrufen könnte.

Durch den erfindungsgemäßen Berührschutz können unbeabsichtigte, versehentliche und/oder ungewollte Berührungen von einem oder mehreren Bedienelementen, insbesondere während des autonomen Betriebs vermieden werden, wodurch das Risiko von Fehlbedienungen reduziert wird. Der erfindungsgemäßen Berührschutz trägt dazu bei, dass die Automatisierungsfunktionen des Fahrzeugs ungestört und/oder zuverlässig arbeiten können, ohne z.B. durch zufällige Eingriffe von außen gestört zu werden. Durch den Schutz der Bedienelemente können auch Passagiere im Fahrzeug befördert werden. Der Berührschutz kann externe Störungen, Eingriffe, Interaktionen und/oder Interferenzen mit einer oder mehreren autonomen Funktionen des Fahrzeugs minimieren bzw. verhindern.

Der hierin beschriebene Berührschutz bietet zudem eine einfache und/oder zuverlässige Möglichkeit, die oben beschriebenen Gefahren über eine rein organisatorische Maßnahme hinaus sicher auszuschließen. Der hierin beschriebene Berührschutz ist besonders kostengünstig, d.h. er erfordert keine teuren "by-wire" Systeme. Der erfindungsgemäße Berührschutz ist zudem flexibel, da er z.B. für den autonomen Betrieb, z.B. den autonomen Fahrbetrieb gemäß SAE Level 4 (L4) oder L4-Betrieb oder den autonomen Fahrbetrieb gemäß SAE Level 5 (L5) oder L5-Betrieb, einfach angebracht und für den manuellen Fahrbetrieb wieder entfernt werden kann. Dies ermöglicht es, dass das Fahrzeug flexibel und/oder auf besonders einfache Weise zwischen autonomem und manuellem Betrieb wechseln kann, während gleichzeitig die Sicherheit der Bedienelemente und dadurch des Fahrzeugs und/oder der Personen darin gewährleistet ist.

Unter einem "Bedienelement", das einen "mechanischen und/oder hydraulischen Durchgriff zu einem entsprechenden Aktor des, insbesondere autonomen, Fahrzeugs umfasst" kann ein "Bedienelement" verstanden werden, dass es i) einer Person, z.B. einem Passagier, des Fahrzeugs und/oder ii) einem Gegenstand innerhalb des Fahrzeugs, der z.B. lose ist und/oder, insbesondere aufgrund der Fahrtbedingungen, sich innerhalb des Fahrzeugs bewegt, z.B. herumfliegt, ermöglicht, das Fahrzeug zu beeinflussen bzw. diese zu steuern. Beispielsweise kann mittels einem derartigen Bedienelements eine oder mehrere Fahrtrichtungen, eine Fahrtgeschwindigkeit und/oder eine Beschleunigung oder dergleichen des, insbesondere autonomen, Fahrzeugs beeinflusst werden, insbesondere wenigstens teilweise. Ein "Aktor" kann als Schnittstelle zwischen dem wenigstens einen Bedienelement und der diesem entsprechenden Funktion, die gesteuert werden soll, verstanden werden. Der Aktor kann Signale und/oder Kräfte von dem wenigstens einen Bedienelement empfangen und sie in die entsprechende Aktion bzw. Funktion umsetzen.

Das wenigstens eine Bedienelement kann beispielsweise ein Lenkrad des, insbesondere autonomen, Fahrzeugs sein. Das Lenkrad kann als das primäre Bedienelement angesehen werden, das einen mechanischen/hydraulischen Durchgriff zur Lenkung des Fahrzeugs ermöglicht. Durch Bewegen, z.B. Drehen, des Lenkrads können mechanische Kräfte erzeugt werden, die den Lenkmechanismus des Fahrzeugs beeinflussen und somit die Richtung des Fahrzeugs steuern. Das wenigstens eine Bedienelement kann eine Pedalerie, z.B. ein Gaspedal, Bremspedal (oder Bremse) oder dergleichen des, insbesondere autonomen, Fahrzeugs sein. Das Gaspedal und/oder das Bremspedal können eine Steuerung der Fahrtgeschwindigkeit und/oder Beschleunigung (z.B. beschleunigen oder abbremsen) des Fahrzeugs ermöglichen. Durch Drücken des Gaspedals kann die Kraftstoffzufuhr erhöht werden, um das Fahrzeug zu beschleunigen, während das Auslösen bzw. Betätigen der Bremse mechanische/hydraulische Kräfte auf die Bremsen übertragen kann, um das Fahrzeug zu verlangsamen und/oder zum Stillstand zu bringen. Das wenigstens eine Bedienelement kann beispielsweise eine Kupplung des, insbesondere autonomen, Fahrzeugs sein. Bei Fahrzeugen mit Schaltgetriebe kann das Auslösen bzw. Betätigen der Kupplung den Wechsel zwischen den Gängen ermöglichen. Die Kupplung ist ein mechanisches Bedienelement, das den Kraftfluss zwischen Motor und Getriebe unterbrechen kann, um den Gangwechsel zu erleichtern. Ein unbeabsichtigtes bzw. versehentliches Auslösen bzw. Betätigen der Kupplung kann Einfluss auf die Fahrtrichtung, Fahrtgeschwindigkeit und/oder Beschleunigung nehmen. Das wenigstens eine Bedienelement kann beispielsweise eine Handbremse des, insbesondere autonomen, Fahrzeugs sein. Die Handbremse ist Bedienelement, das mechanische bzw. hydraulische Kräfte verwendet, um das Fahrzeug zu parken und/oder, z.B. in Notfallsituationen, zum Stillstand zu bringen. Auch ein Schalthebel des, insbesondere autonomen, Fahrzeuges wäre als Bedienelement denkbar. Bei Fahrzeugen mit hydraulischer Lenkung kann ein Bedienelement verwendet werden, um den hydraulischen Druck zu steuern, der auf das Lenksystem übertragen wird, um die Lenkung des Fahrzeugs zu erleichtern.

Der Berührschutz kann als Einhausung ausgestaltet und/oder ausgebildet sein. Eine "Einhausung" kann als physische Struktur und/oder physische Abdeckung verstanden werden, die um die Bedienelemente herum anordenbar, darauf aufsetzbar und/oder befestigbar ist, um sie z.B. vor unbeabsichtigter Interaktion, Auslösung, Berührung, Betätigung, Manipulation, Steuerung und/oder Störung zu schützen. Wenn hierin Bezug auf einen Berührschutz genommen wird, kann gleichermaßen Bezug auf die Einhausung genommen werden und umgekehrt, d.h. diese Merkmale können sowohl den Berührschutz als auch die Einhausung betreffen. Die Einhausung kann eingerichtet sein, das wenigstens eine Bedienelement zu umgeben und/oder zu umschließen, insbesondere im Wesentlichen vollständig. Die Einhausung kann also die Bedienelemente im Wesentlichen vollständig umgeben und/oder abdecken und so einen physischen Schutz bzw. eine Grenze/Barriere bereitstellen, der es verhindert, dass sie versehentlich betätigt werden können. Dies kann dazu beitragen, das Risiko von Fehlbedienungen während des autonomen Betriebs zu minimieren und die Sicherheit des Fahrzeugs zu erhöhen.

Diese Einhausung kann aus verschiedenen Materialien wie Kunststoff, Metall, Glas, Acryl, Holz und/oder Verbundwerkstoffen gefertigt sein, beispielsweise auch schichtweise hergestellt sein. Je nach Anforderungen des Fahrzeugs bzw. der Bedienelemente und/oder des autonomen Betriebs kann der Berührschutz bzw. die Einhausung unterschiedliche Formen, Materialien und/oder Abmessungen bzw. Größen und/der Eigenschaften aufweisen.

Der Berührschutz bzw. die Einhausung kann z.B. eine im Wesentlichen
- rechteckige,
- längliche,
- eckige,
- würfelförmige,
- quaderförmige,
- kastenförmige,
- topfförmige,
- runde,
- kreisförmige,
- zylinderförmige bzw. hohlzylinderförmige,
- oder eine Kombination daraus, Form bzw. Struktur aufweisen, die das wenigstens eine Bedienelemente im Wesentlichen vollständig umgibt und/oder abdeckt. Der Berührschutz bzw. die Einhausung kann beispielsweise als Box, Kasten oder Behälter ausgebildet sein. Auch unregelmäßige, unsymmetrische und/oder ungleichmäßige Formen und/oder Strukturen wären jedoch denkbar. Auch gebogene, gekrümmte, schräge, gewinkelte und/oder geneigte Flächen bzw. Kanten, Verjüngungen, Absätze, Einschnitte, Vorsprünge, Erhebungen, Vertiefungen, Ausnehmungen, Dickenänderungen und/oder Wandstärkensprünge, - änderungen, sowie eckige und/oder abgerundete Ecken können vorgesehen sein. Ferner können strukturierte, farblich gekennzeichnete und/oder transparente Oberflächen vorgesehen sein. Auch andere Formen sind jedoch denkbar, sodass der hierin beschriebene Berührschutz bzw. die hierin beschriebene Einhausung nicht auf eine spezielle Form beschränkt ist.

Der erfindungsgemäße Berührschutz bzw. die Einhausung kann Abmessungen (z.B. Länge, Breite und/oder Höhe) und/oder eine Form aufweisen die auf Abmessungen und/oder eine Form von einem oder mehreren Bedienelementen abgestimmt sind und/oder daran angepasst sind. Der erfindungsgemäße Berührschutz bzw. die Einhausung kann Abmessungen und/oder eine Form aufweisen, die den Abmessungen und/oder der Form von einem oder mehreren Bedienelementen im Wesentlichen entsprechen. Beispielsweise kann die Einhausung so konstruiert werden, dass sie speziell auf ein einziges, z.B. bestimmtes, oder mehrere Bedienelement abgestimmt bzw. angepasst ist.

Zum Beispiel kann eine Einhausung für das Lenkrad eine im Wesentlichen runde Form haben und/oder Abmessungen aufweisen, damit die diese um das Lenkrad herum passt, um es vor unbeabsichtigter Berührung zu schützen. Eine andere Einhausung könnte beispielsweise speziell für den Schalthebel entwickelt sein und eine im Wesentlichen längliche Form haben, die den Schalthebel im Wesentlichen vollständig umschließt.

Der erfindungsgemäße Berührschutz bzw. die Einhausung kann Abmessungen und/oder eine Form aufweisen, um mehrere Bedienelemente (z.B. wenigstens zwei oder mehr), z.B. gemeinsam und/oder gleichzeitig, zu umgeben, abzudecken und/oder zu schützen. Zum Beispiel könnte eine Einhausung bereitgestellt werden, die sowohl das Lenkrad als auch den Schalthebel abdeckt, um z.B. eine umfassende(re) Abdeckung für die beispielsweise die wichtigsten Bedienelemente zu bieten. Auf diese Weise kann die Einhausung individuell gestaltet werden, um den spezifischen Anforderungen des Fahrzeugs und des autonomen Betriebs gerecht zu werden.

Die Einhausung kann beispielsweise mehrere Einhausungselemente umfassen, z.B. wenigstens ein erstes Einhausungselement z.B. für ein erstes Bedienelement (oder auch mehrere) und wenigstens ein zweites, insbesondere separates, Einhausungselement für ein zweites Bedienelement (oder mehrere) des, insbesondere autonomen, Fahrzeugs.

Der Berührschutz bzw. die Einhausung kann einstückig ausgebildet sein. Mit anderen Worten, die Einhausung kann, z.B. abgesehen von etwaigen hierin beschriebenen Befestigungsmitteln und/oder hierin beschriebenen Sensoren, als ein einzelnes, zusammenhängendes Stück, Teil, Bauteil, Element und/oder eine Struktur gefertigt sein, ohne dass z.B. separate Teile miteinander verbunden werden müssen. Wenn die Einhausung aus einem einzigen Stück gefertigt ist, kann sie robuster und/oder widerstandsfähiger gegenüber Stößen, Vibrationen und/oder anderen äußeren Einflüssen sein, z.B. im Vergleich zu einer Einhausung, die aus mehreren Teilen besteht. Eine einstückige Einhausung kann einfach und schnell installiert bzw. montiert werden, da keine Montage bzw. kein Zusammenbau erforderlich ist. Dies spart Zeit und Arbeitsaufwand während der Herstellung und Montage. Die Einhausung kann beispielsweise jedoch auch mehrteilig ausgebildet sein. Mit anderen Worten, die Einhausung kann z.B. zwei oder mehr separate Teile umfassen, die miteinander verbunden werden können, z.B. lösbar. Die mehrteilige Einhausung kann es ermöglichen, einzelne Teile unabhängig voneinander zu montieren oder zu demontieren, z.B. je nach Bedarf. Dies kann die Installation der Einhausung erleichtern.

Der Berührschutz bzw. die Einhausung kann wenigstens ein Befestigungsmittel aufweisen, insbesondere zur Befestigung mit einem oder mehreren Bauteilen, insbesondere Serienbauteilen der Kabine oder Armatur des, insbesondere autonomen, Fahrzeugs. Die Befestigungsmittel können z.B. krallenartig ausgebildet sein, z.B. sich eine Form aufweisen, die an Krallen oder Haken erinnert. Diese Befestigungsmittel können dazu dienen, den Berührschutz bzw. die Einhausung an bestimmten Strukturen und/oder Oberflächen in der Kabine des Fahrzeugs festzuhalten, indem diese beispielsweise damit ein-/angreifen und/oder sich in sie eingraben. Die Befestigungsmittel können z.B. hakenartig ausgebildet sein, z.B. hakenähnlich geformt sein und dazu dienen, den Berührschutz an entsprechenden Halterungen und/oder Befestigungspunkten in der Kabine des Fahrzeugs aufzuhängen und/oder einzuhaken, um ihn zu fixieren. Die Befestigungsmittel können z.B. schraubenartig ausgebildet sein, z.B. Gewinde und/oder schraubenähnliche Strukturen aufweisen, die es ermöglichen, den Berührschutz an bestimmten Oberflächen und/oder Strukturen in der Kabine des Fahrzeugs anzubringen, indem sie in diese beispielsweise eingedreht werden. Die Verwendung dieser Befestigungsmittel ermöglicht es, den Berührschutz sicher und zuverlässig an den entsprechenden Stellen in der Kabine des Fahrzeugs zu befestigen. Dies gewährleistet, dass der Berührschutz fest an seinem Platz bleibt (z.B. auch während der Fahrt) und seine Schutzwirkung optimal entfalten kann, indem er die Bedienelemente vor unbeabsichtigter Berührung oder Beschädigung schützt. Andere Befestigungsmittel, wie beispielsweise magnetische Befestigungsmittel z.B. Magneten, um den Berührschutz an metallischen Oberflächen in der Kabine des Fahrzeugs anzubringen; Klettverschlüsse; Schnappmechanismen und/oder -Verschlüsse; Rasten; Saugnäpfe z.B., um den Berührschutz an glatten Oberflächen in der Kabine des Fahrzeugs anzubringen, indem sie durch Unterdruck an diesen haften; und/oder Riemen bzw. Gurte um den Berührschutz an verschiedenen Stellen in der Kabine des Fahrzeugs zu befestigen, indem sie beispielsweise um entsprechende Strukturen, Elemente und/oder Halterungen herumgeführt und/oder festgezurrt bzw. gesichert werden.

Das Fahrzeug kann ein Dual-Mode Fahrzeug sein. Das Dual-Mode Fahrzeug kann sowohl manuell, insbesondere durch einen Fahrer oder Passagier, als auch autonom, insbesondere ohne Fahrer oder dessen Eingreifen, betreibbar und/oder steuerbar sein. In einem manuellen Modus kann das Fahrzeug von einem Fahrer gesteuert werden, der z.B. das Lenken, Beschleunigen, Bremsen und/oder andere Funktionen des Fahrzeugs übernimmt. Dies erfordert im Wesentlichen die ständige Anwesenheit und/oder Aufmerksamkeit eines menschlichen Fahrers. Im autonomen Modus hingegen kann das Fahrzeug durch autonome Systeme gesteuert, die Sensoren, Kameras, Radare und/oder andere Technologien verwenden, um die Umgebung des Fahrzeugs wahrzunehmen und/oder entsprechend darauf zu reagieren. Das Fahrzeug kann im Wesentlichen ohne das Eingreifen, Steuern, Bedienen und/oder die Überwachung eines menschlichen Fahrers fahren.

Der Berührschutz bzw. die Einhausung kann für einen autonomen Fahrbetrieb gemäß SAE-Standardklassifizierungen Level 4 (kurz L4, L4-Betrieb oder SAE Level 4 Betrieb) und/oder SAE-Standardklassifizierungen Level 5 (kurz L5, L5-Betrieb oder SAE Level 5 Betrieb) des, insbesondere autonomen, Fahrzeugs, ausgelegt und/oder eingerichtet sein. Die Abkürzung "SAE" kann dabei für Society of Automotive Engineers stehen, welche Normen und/oder Standards für die Automobilindustrie erstellt und autonome Fahrstufen klassifizieren kann. Mit anderen Worten, der Berührschutz bzw. die Einhausung kann eingerichtet sein, wenigstens ein Bedienelement des Fahrzeugs während eines im Wesentlichen vollständig autonomen Fahrbetriebs zu schützen, bei z.B. dem kein Eingriff und/oder keine Unterstützung durch einen menschlichen Fahrer erforderlich ist.

Das Fahrzeug kann im Level 4 Betrieb gemäß den SAE-Standardklassifizierungen (autonomer Fahrbetrieb gemäß SAE Level 4), im Wesentlichen vollständig, frei von Eingriffen und/oder Unterstützungen durch einen menschlichen Fahrer sein, insbesondere auf einer festgelegten (ODD; Operational Design Domain) Strecke. Der Berührschutz spielt eine wichtige Rolle dabei, sicherzustellen, dass die Bedienelemente des Fahrzeugs während dieses autonomen Betriebs geschützt sind und unbeabsichtigte, versehentliche und/oder unerwünschte Eingriffe vermieden werden.

Im Level 5-Betrieb gemäß den SAE-Standardklassifizierungen (autonomer Fahrbetrieb gemäß SAE Level 5) ist das Fahrzeug im Wesentlichen vollständig autonom und benötigt keinerlei menschliche Eingriffe und/oder Überwachung, d.h. weder auf festgelegten Strecken noch in bestimmten Umgebungen. Im Gegensatz zum autonomen Fahrbetrieb gemäß SAE Level 4 (oder L4-Betrieb), der sich, wie erwähnt, auf einen begrenzten Bereich und/oder eine festgelegte Strecke beschränken kann, ist ein Fahrzeug im autonomen Fahrbetrieb gemäß SAE Level 5 (oder L5-Betrieb) in der Lage, unter allen Bedingungen und in allen Umgebungen autonom zu operieren.

Für den Berührschutz bedeutet dies, dass er auch während des Level 5-Betriebs weiterhin eine wichtige Rolle spielt, um die Bedienelemente des Fahrzeugs vor unbeabsichtigter Berührung und/oder Beschädigung zu schützen. Obwohl im Level 4 und /oder Level 5-Betrieb keine menschliche Überwachung erforderlich sein kann, können unerwartete Ereignisse auftreten, die dazu führen könnten, dass Personen und/oder Gegenstände im Fahrzeug versehentlich mit den Bedienelementen interagieren. Der Berührschutz trägt dazu bei, solche unerwünschten Eingriffe zu verhindern und die Sicherheit und Integrität des autonomen Systems zu gewährleisten.

Der erfindungsgemäße Berührschutz bzw. die Einhausung kann mobil und/oder tragbar ausgeführt sein. Der erfindungsgemäße Berührschutz bzw. die Einhausung kann an dem wenigstens einen Bedienelement anbringbar, darauf aufsetzbar und/oder davon abnehmbar sein. Mit anderen Worten, der erfindungsgemäße Berührschutz bzw. die Einhausung ist nicht permanent mit dem Fahrzeug verbunden (vielmehr lösbar), sondern kann flexibel, z.B. an verschiedenen Positionen angebracht oder entfernt werden. Diese Tragbarkeit/Mobilität ermöglicht es dem Berührschutz auch an verschiedenen Bedienelementen des Fahrzeugs anzubringen, z.B. je nach Bedarf bzw. den Anforderungen des Betriebs.

Eine Position, Orientierung, Ausrichtung und/oder Anordnung des Berührschutz bzw. der Einhausung an dem, insbesondere autonomen, Fahrzeug, beispielsweise im Innenraum, an der Armatur und/oder in der Kabine bzw. an dem wenigstens einen Bedienelement, kann in Bezug auf das wenigstens eine Bedienelement, veränderbar, einstellbar, justierbar, modifizierbar und/oder anpassbar sein. Diese Anpassbarkeit kann eine präzise Platzierung und/oder Ausrichtung des Berührschutzes ermöglichen, um z.B. eine effektive Sicherung der Bedienelemente zu gewährleisten und/oder die Benutzerfreundlichkeit zu maximieren.

Der Berührschutz bzw. die Einhausung kann wenigstens einen Sensor umfassen. Der wenigstens eine Sensor kann beispielsweise an einem Befestigungsmittel des Berührschutzes bzw. der Einhausung angeordnet sein, oder wenigstens in, insbesondere unmittelbarer, Nähe dazu. Der wenigstens eine Sensor kann als Berührungsschalter und/oder Kontaktschalter ausgebildet sein. Beispielsweise kann der Kontaktschalter aktiviert werden, wenn eine externe Kraft auf die Einhausung, z.B. durch das Bedienelement, ausgeübt wird. Der wenigstens eine Sensor könnte auch eine visuelle Erkennungstechnologie verwenden, beispielsweise wenigstens eine Kamera, welche die Position und/oder Ausrichtung des Berührschutzes im Vergleich zu festen Referenzpunkten und/oder Markierungen aufnehmen kann. Auch mechanische Indikatoren, Anzeiger, Kennzeichnungen und/oder Markierungen könnten als Sensor verwendet werden, um die ordnungsgemäße Anbringung des Berührschutzes anzuzeigen. Dies könnte beispielsweise durch farbige Markierungen und/oder Rasten erfolgen, die z.B. visuell anzeigen, ob der Berührschutz korrekt platziert ist.

Der wenigstens eine Sensor kann eingerichtet sein, eine, vorzugsweise ordnungsgemäße und/oder korrekte, Anbringung, insbesondere eine Position und/oder Ausrichtung, und/oder eine, vorzugsweise ordnungsgemäße und/oder korrekte, Befestigung des Berührschutzes an dem wenigstens einen Bedienelement zu erfassen und/oder auszuwerten. Mit anderen Worten, der wenigstens eine Sensor kann dazu eingerichtet sein, sicherzustellen, dass der Berührschutz bzw. die Einhausung korrekt am Bedienelement angebracht ist, um eine wirksame Funktion und/oder Schutzwirkung zu gewährleisten.

Eine Freigabe und/oder Aktivierung des autonomen Fahrbetriebs gemäß SAE Level 4 (oder L4-Betrieb) oder des autonomen Fahrbetriebs gemäß SAE Level 5 (oder L5-Betrieb) des, insbesondere autonomen, Fahrzeugs kann auf wenigstens einem Sensorsignal des wenigstens einen Sensors basiert. Wenn der wenigstens eine Sensor beispielsweise feststellt, dass der Berührschutz bzw. die Einhausung ordnungsgemäß angebracht ist, z.B. die Position und/oder Ausrichtung und/oder Befestigung, korrekt bzw. ordnungsgemäß ist, kann dieser ein Signal erzeugen und/oder ausgeben, das darauf hinweisen kann, dass das Fahrzeug bereit ist, in den autonomen Fahrbetrieb gemäß SAE Level 4 bzw. den autonomen Fahrbetrieb gemäß SAE Level 5 überzugehen. Dieses Signal kann z.B. von den Steuersystem bzw. Automatisierungssystem des Fahrzeugs erkannt und/oder verarbeitet bzw. ausgewertet werden. Wenn alle anderen erforderlichen Bedingungen erfüllt sind, kann der autonome Betrieb des Fahrzeugs freigegeben und/oder aktiviert werden. Diese Art der Freigabe des autonomen Betriebs basierend auf einem Sensorsignal kann eine effektive, günstige und einfache Möglichkeit bereitstellen, sicherzustellen, dass das Fahrzeug in einem geeigneten Zustand ist, bevor es in den autonomen Modus übergeht.

Obwohl das Vorstehende auf Ausführungsformen der Offenbarung gerichtet ist, können andere und weitere Ausführungsformen der Offenbarung ohne Abweichung vom grundlegenden Umfang davon entwickelt werden, wobei der Umfang durch die nachfolgenden Ansprüche bestimmt wird.

## Patentansprüche

1. Berührschutz für wenigstens ein Bedienelement eines, insbesondere autonomen, Fahrzeugs, der eingerichtet ist, eine Betätigung des wenigstens einen Bedienelements während eines, insbesondere autonomen, Fahrbetriebs, im Wesentlichen zu verhindern;
wobei das wenigstens eine Bedienelement einen mechanischen und/oder
hydraulischen Durchgriff zu einem entsprechenden Aktor des, insbesondere autonomen, Fahrzeugs, umfasst.

2. Berührschutz nach Anspruch 1, wobei das wenigstens ein Bedienelement ein Lenkrad, eine Pedalerie, vorzugsweise ein Gaspedal, Bremspedal, oder dergleichen, des, insbesondere autonomen, Fahrzeugs ist.

3. Berührschutz nach einem der vorstehenden Ansprüche, wobei der Berührschutz als Einhausung, insbesondere als Box oder Behälter, ausgestaltet ist, wobei die Einhausung eingerichtet ist, das wenigstens eine Bedienelement zu umgeben, zu umschließen und/oder abzudecken, insbesondere im Wesentlichen vollständig.

4. Berührschutz nach Anspruch 3, wobei die Einhausung einstückig oder mehrteilig ausgebildet ist.

5. Berührschutz nach einem der vorstehenden Ansprüche, wobei der Berührschutz mehrere Einhausungselemente umfasst, wobei der Berührschutz wenigstens ein erstes Einhausungselement für wenigstens ein erstes Bedienelement und wenigstens ein zweites, insbesondere separates, Einhausungselement für wenigstens ein zweites Bedienelement des, insbesondere autonomen, Fahrzeugs umfasst.

6. Berührschutz nach einem der vorstehenden Ansprüche, wobei Abmessungen und/oder eine Form des Berührschutzes auf Abmessungen und/oder eine Form von einem oder mehreren Bedienelementen abgestimmt und/oder daran angepasst sind.

7. Berührschutz nach einem der vorstehenden Ansprüche, wobei der Berührschutz wenigstens ein, insbesondere krallenartiges, hakenartiges und/oder schraubenartiges, Befestigungsmittel aufweist, insbesondere zur Befestigung mit einem oder mehreren Bauteilen und/oder Komponenten der Kabine des, insbesondere autonomen, Fahrzeugs.

8. Berührschutz nach einem der vorstehenden Ansprüche, wobei das Fahrzeug ein Dual-Mode Fahrzeug ist, wobei insbesondere das Dual-Mode Fahrzeug sowohl manuell, insbesondere durch einen Fahrer, als auch autonom, insbesondere ohne Fahrer oder dessen Eingreifen, betreibbar und/oder steuerbar ist.

9. Berührschutz nach einem der vorstehenden Ansprüche, wobei der Berührschutz für einen autonomen Fahrbetrieb gemäß SAE Level 4 und/oder einen autonomen Fahrbetrieb gemäß SAE Level 5 des, insbesondere autonomen, Fahrzeugs, ausgelegt und/oder eingerichtet ist.

10. Berührschutz nach einem der vorstehenden Ansprüche, wobei das Fahrzeug in dem autonomen Fahrbetrieb gemäß SAE Level 4 und/oder in dem autonomen Fahrbetrieb gemäß SAE Level 5, im Wesentlichen vollständig, frei von Eingriffen und/oder Unterstützungen durch einen menschlichen Fahrer ist, insbesondere auf einer festgelegten (ODD; Operational Design Domain) Strecke.

11. Berührschutz nach einem der vorstehenden Ansprüche, wobei der Berührschutz mobil und/oder tragbar ausgeführt ist und an dem wenigstens einen Bedienelement anbringbar und/oder abnehmbar ist.

12. Berührschutz nach einem der vorstehenden Ansprüche, wobei eine Position und/oder Ausrichtung des Berührschutz an dem, insbesondere autonomen, Fahrzeug in Bezug auf das wenigstens eine Bedienelement, veränderbar, einstellbar und/oder anpassbar ist.

13. Berührschutz nach einem der vorstehenden Ansprüche, wobei der Berührschutz wenigstens einen Sensor, vorzugsweise in Form eines Kontaktschalters, umfasst, wobei insbesondere der wenigstens eine Sensor an einem Befestigungsmittel des Berührschutz angeordnet ist.

14. Berührschutz nach Anspruch 13, wobei der wenigstens eine Sensor eingerichtet ist, eine, vorzugsweise ordnungsgemäße, Anbringung, insbesondere eine Position und/oder Ausrichtung, und/oder eine Befestigung des Berührschutzes an dem wenigstens einen Bedienelement zu erfassen und/oder auszuwerten.

15. Berührschutz nach einem der vorstehenden Ansprüche 13-14, wobei eine Freigabe und/oder Aktivierung eines autonomen Fahrbetriebs gemäß SAE Level 4 oder eines autonomen Fahrbetriebs gemäß SAE Level 5 des, insbesondere autonomen, Fahrzeugs auf wenigstens einem Sensorsignal des wenigstens einen Sensors basiert.
